# EUROPÄISCHE PATENTANMELDUNG

(11) **EP 4 722 783 A1**
(43) Veröffentlichungstag der Anmeldung: **08.04.2026**
(21) Anmeldenummer: 24203910.5
(22) Anmeldetag: 01.10.2024
(51) Int. Cl.: G02B 21/36

(54) **SYSTEM ZUR UNTERSTÜTZUNG EINES NUTZERS BEI DER BILDBASIERTEN ANALYSE EINER GEWEBEPROBE**

(71) Anmelder: Eissing-Al-Mukahal, Ali, 30171 Hannover (DE); Wilkens, Ludwig, 30539 Hannover (DE)
(72) Erfinder: Eissing-Al-Mukahal, Ali, 30171 Hannover (DE); Wilkens, Ludwig, 30539 Hannover (DE)
(74) Vertreter: Eisenführ Speiser

(57) **Zusammenfassung**

Die Erfindung bezieht sich auf ein System zur Unterstützung eines Nutzers bei der bildbasierten Analyse einer Gewebeprobe (10). Das System weist eine Bildbereitstellungseinheit (101) auf, die eingerichtet ist, ein über eine an ein Mikroskop (12) angeschlossene Mikroskopkamera (11) aufgenommenes Bild der Gewebeprobe bereitzustellen, und zudem eine Bildverarbeitungseinheit (102), die eingerichtet ist, aus dem bereitgestellten Bild ein Bild der Gewebeprobe mit einer virtuellen Färbung zu erzeugen. Darüber hinaus weist das System eine Bildausgabeeinheit (103) auf, die eingerichtet ist, das erzeugte Bild zur Analyse durch den Nutzer an eine Anzeigevorrichtung (13) auszugeben. Das System erlaubt ressourcenschonende und gleichzeitig besonders sorgfältige histologische Analysen.

## Beschreibung

### GEBIET DER ERFINDUNG

Die Erfindung betrifft ein System, ein Verfahren und ein Computerprogramm zur Unterstützung eines Nutzers bei der bildbasierten Analyse einer Gewebeprobe. Zudem betrifft die Erfindung eine das System umfassende Einrichtung zur bildbasierten Analyse einer Gewebeprobe sowie eine entsprechende Verwendung des Systems.

### TECHNOLOGISCHER HINTERGRUND

Zur Analyse einer Gewebeprobe ist es üblich, die Gewebeprobe in einzelne Schnitte zu zerteilen und diese vor Abbildung unter einem Mikroskop auf geeignete Weise einzufärben, um Gewebe- und Zellstrukturen von Interesse unter dem Mikroskop sichtbar zu machen. Hierzu ist eine Vielzahl verschiedener Färbemittel bekannt.

Mit dem beschriebenen, üblichen Vorgehen zur Analyse einer Gewebeprobe wird eine Reihe von Nachteilen in Kauf genommen. Insbesondere ist das Vorgehen verhältnismäßig arbeitsaufwändig und wenig ressourcenschonend. Zudem ist die Analyse in der Praxis auf konkrete Fragestellungen beschränkt und kaum standardisierbar, da die verwendeten Färbemittel jeweils auf spezifische Marker abgestimmt sind und sich das Vorgehen in verschiedenen Analyselabor im Einzelnen voneinander unterscheiden kann.

### ZUSAMMENFASSUNG DER ERFINDUNG

Der vorliegenden Erfindung liegt die Aufgabe zugrunde, zumindest einige der oben beschriebenen Nachteile zu überwinden.

Gemäß einem ersten der Aspekt Erfindung wird ein System zur Unterstützung eines Nutzers bei der bildbasierten Analyse einer Gewebeprobe vorgeschlagen. Das System weist eine Bildbereitstellungseinheit, eine Bildverarbeitungseinheit und eine Bildausgabeeinheit auf. Die Bildbereitstellungseinheit ist eingerichtet, ein über eine an ein Mikroskop angeschlossene Mikroskopkamera aufgenommenes Bild der Gewebeprobe bereitzustellen. Die Bildverarbeitungseinheit ist eingerichtet, aus dem bereitgestellten Bild ein Bild der Gewebeprobe mit einer virtuellen Färbung zu erzeugen. Die Bildausgabeeinheit ist eingerichtet, das erzeugte Bild zur Analyse durch den Nutzer an eine Anzeigevorrichtung auszugeben.

Es wird also vorgeschlagen, statt einer tatsächlichen Färbung der Gewebeprobe, was auch als chemische Färbung bezeichnet werden könnte, eine virtuelle Färbung vorzunehmen. Eine virtuelle Färbung könnte auch als digitale Färbung bezeichnet werden. Mit anderen Worten wird also vorgeschlagen, nicht die Gewebeprobe selbst zu färben, sondern ein von ihr aufgenommenes Bild. Die virtuelle Färbung erfolgt dabei vorzugsweise unter Verwendung eines Modells, das mittels maschinellem Lernen entsprechend trainiert worden ist. Beispielsweise kann dazu eine der Techniken angewendet werden, die in dem folgenden Artikel vorgestellt werden: "Deep learning-enabled virtual histological staining of biological samples" von B. Bai et al., Science & Applications (2023)12:57. Bei Analyse von Gewebeproben mittels virtueller statt tatsächlicher Färbung entfällt die Notwendigkeit von Färbemittel sowie der apparative und personelle Aufwand zu dessen Verwendung. Zudem sind virtuelle Färbungen standardisierbar. Auch der zeitliche Aufwand für eine Färbung kann durch ihre virtuelle Umsetzung erheblich verringert werden. Während eine tatsächliche Färbung eines Gewebeschnitts typischerweise eine Zeit von etwa 45 Minuten benötigt, kann eine virtuelle Färbung eines entsprechenden Bildes beispielsweise einen Zeitraum von nur etwa 5 bis 10 Minuten beanspruchen. Die zeitliche Überlegenheit der virtuellen Färbung gegenüber der tatsächlichen Färbung verstärkt sich noch weiter für den Fall, dass sich erst während der Analyse die Notwendigkeit einer weiteren Färbung ergibt. Während für eine weitere virtuelle Färbung eines Bildes beispielsweise lediglich eine der weiteren Färbung entsprechende Nutzerauswahl für die Art der Bildverarbeitung des Bildes getroffen werden muss, müsste für eine tatsächliche Färbung zunächst die Erzeugung eines tatsächlichen, weiteren Gewebeschnitts angefordert werden, beispielsweise bei einem dafür zuständigen Labor. Erst dieser weitere Gewebeschnitt könnte dann mit der weiteren, tatsächlichen Färbung versehen werden. Virtuelle Färbungen lassen also verhältnismäßig leicht zu, ein und dieselbe Zell- oder Gewebestruktur auf verschiedene Weisen einzufärben. Letzteres überwindet den weiteren Nachteil tatsächlicher, d. h. chemischer, Färbungen, dass diese einen teils destruktiven Prozess darstellen, der die Wiederverwendung derselben Probe für ein anderes Färbeverfahren teils unmöglich oder allenfalls mit erheblichem Mehraufwand und Einschränkungen möglich macht. Ein virtuelles Färben ermöglicht hingegen eine Analyse von Gewebeschnitten, ohne die Möglichkeiten für zusätzliche oder andere Färbungen des identischen Gewebeausschnitts einzuschränken. Das kann insbesondere für Gewebeproben wie beispielsweise sehr kleine Nadelproben relevant werden, die nicht oder nur schwer mehrere dünne aneinandergrenzende tatsächliche Schnitte erlauben. Allerdings besteht auch für andere Gewebeproben allgemein die Gefahr, dass relevante Zellen/Merkmale in tatsächlich erzeugten Folgeschnitten fehlen könnten.

Darüber hinaus wird aber insbesondere vorgeschlagen, als das virtuell zu färbende Bild ein Bild bereitzustellen, das über eine an ein Mikroskop angeschlossene Mikroskopkamera aufgenommen wurde. Damit macht das vorgeschlagene System die durch die virtuelle Färbung erreichbaren Vorteile auch in solchen Kontexten nutzbar, in denen Gewebeproben mittels eines Mikroskops analysiert werden. Dies ist insbesondere in der Histopathologie der Fall. Dem liegt die Einsicht zugrunde, dass eine ausreichend verlässliche virtuelle Färbung nicht nur für Bilder von Gewebeproben möglich ist, die mittels aufwendiger Vorrichtungen zur Bildgebung aufgenommen wurden, sondern auch für solche, die mit den verhältnismäßig einfachen apparativen Mitteln eines Mikroskops und einer daran angeschlossene Mikroskopkamera aufgenommen wurden. Beispielsweise wird eine Aufnahme der virtuell zu färbenden Bildern mittels eines Whole-Slide-Scanners, dessen Einsatz in der wissenschaftlichen Histologie bevorzugt wird, als verzichtbar angesehen.

Insbesondere eine etwaige Varianz in den Bildeigenschaften von Bildern, die mittels eines Mikroskops aufgenommen werden, wird vorliegend nicht als Hindernis für die Nutzbarmachung von virtuellen Färbungen zur Analyse von Gewebeproben angesehen. Eine solche Varianz tritt erfahrungsgemäß insbesondere dann auf, wenn das Mikroskop über eine manuelle Fokussiereinrichtung verfügt, die durch einen Nutzer bedient werden muss, um auf die jeweilige Probe zu fokussieren. Als besonders überraschend kann es dementsprechend angesehen werden, dass eine virtuelle Färbung von Gewebeproben bzw. der davon aufgenommenen Bilder auch dann verlässlich möglich ist, wenn das Mikroskop, das zur Aufnahme der Bilder verwendet wird, eine manuelle Fokussiereinrichtung zur manuellen Fokussierung der jeweiligen Gewebeprobe aufweist und das jeweils bereitgestellte Bild mittels der manuellen Fokussiereinrichtung aufgenommen wurde. Es entspricht aber ebenso einer Ausführungsform der vorliegenden Erfindung, dass das Mikroskop eine automatische Fokussiereinrichtung zur automatischen Fokussierung der Gewebeprobe aufweist und das bereitgestellte Bild mittels der automatischen Fokussiereinrichtung aufgenommen wurde. Ein solcher "Autofokus" eines Mikroskops erlaubt eine Aufnahme von Bildern mit gleichbleibenderen Eigenschaften und somit noch verlässlichere virtuelle Färbungen. Als verlässlich kann eine virtuelle Färbung angesehen werden, wenn sie aus einem bereitgestellten Bild einer Gewebeprobe ein Bild erzeugt, das jenem entspricht, das von der Gewebeprobe aufgenommen würde, nachdem sie mit einem der virtuellen Färbung entsprechenden Färbemittel tatsächlich gefärbt worden ist.

Bekannte Färbemittel sind beispielsweise H&E (Hämatoxylin und Eosin), MT ("Masson's Trichrom"), PAS ("Periodic acid-Schiff") und ICH (immunhistochemische), wobei H&E zur Unterscheidung von Zellkernen und extrazellulärer Matrix verwendet wird, MT und PAS für Kollagenfasern und Glykoproteine geeignet sind und ICH zur Hervorhebung spezifischer Epitope dient. Grundsätzlich kann für jedes beliebige Färbemittel eine entsprechende virtuelle Färbung vorgesehen sein, beispielsweise durch entsprechendes Training eines zur virtuellen Färbung verwendeten Modells. Im Zuge des Trainings kann das Modell trainiert worden sein, Eingangsbilder auf Ausgangsbilder von Gewebeproben abzubilden, wobei zum Training als Eingangsbilder Bilder von ungefärbten Gewebeproben und als Ausgangsbilder Bilder von Gewebeproben mit der jeweils zu trainierenden Färbung verwendet wurden. Um auch virtuelle Umfärbungen vornehmen zu können, können zum Training statt der Eingangsbilder von ungefärbten Gewebeproben Eingangsbilder von ebenfalls gefärbten Gewebeproben verwendet werden, wobei die Färbung der Eingangsbilder von der Färbung der zum Training verwendeten Ausgangsbilder abweicht.

Das von der Bildbereitstellungseinheit bereitgestellte Bild kann also ein Bild einer ungefärbten Gewebeprobe sein, oder aber ein Bild einer mit einer ersten Färbung gefärbten Gewebeprobe. Ist das bereitgestellte Bild ein Bild einer mit einer ersten Färbung gefärbten Gewebeprobe, ist die virtuelle Färbung des von der Bildverarbeitungseinheit erzeugten Bildes eine virtuelle Färbung mit einer zweiten Färbung, die von der ersten Färbung verschieden ist. Im Allgemeinen kann die Bildverarbeitungseinheit eingerichtet sein, aus einem bereitgestellten Bild mit keiner oder einer beliebigen ersten Färbung ein Bild mit einer beliebigen zweiten Färbung zu erzeugen. Es versteht sich, dass die Färbungen zwar beliebig sind, aber vordefiniert. Zudem sei angemerkt, dass die erste Färbung, falls vorhanden, eine tatsächliche Färbung oder eine virtuelle Färbung sein kann. Mit anderen Worten kann das bereitgestellte Bild ein Bild einer in einer ersten Färbung gefärbten Gewebeprobe sein, oder ein Bild, das bereits selbst durch virtuelle Färbung erzeugt worden ist.

Welche virtuelle Färbung von der Bildbereitstellungseinheit vorgenommen wird, kann durch den Nutzer bestimmbar sein. In einer bevorzugten Ausführungsform ist die Bildverarbeitungseinheit dementsprechend eingerichtet, die virtuelle Färbung abhängig von einer Nutzereingabe aus einer vorbestimmten Mehrzahl von möglichen virtuellen Färbungen auszuwählen. Für jede der möglichen virtuellen Färbungen kann jeweils ein entsprechendes Modell trainiert worden sein, auf das die Bildverarbeitungseinheit eingerichtet ist zuzugreifen.

Das Mikroskop kann auch als Lichtmikroskop bezeichnet werden. Die Abbildung der Gewebeprobe geschieht vorzugsweise mittels Licht im sichtbaren Bereich, ist darauf aber grundsätzlich nicht beschränkt. Das Mikroskop kann insbesondere ein Durchlichtmikroskop oder ein Fluoreszenzmikroskop sein. Das bereitgestellte Bild kann also insbesondere ein durchlichtmikroskopisches Bild oder ein fluoreszenzmikroskopisches Bild sein. Ein durchlichtmikroskopisches Bild kann als ein Bild verstanden werden, das mittels Durchlichtmikroskopie aufgenommen worden ist. Ein fluoreszenzmikroskopisches Bild kann als ein Bild verstanden werden, das mittels Fluoreszenzmikroskopie aufgenommen worden ist.

Vorzugsweise weist das Mikroskop eine Optik auf, die einen ersten optischen Ausgang zum Anschluss der Mikroskopkamera und einen zweiten Ausgang mit einem Okular zur Betrachtung einer jeweils abgebildeten Gewebeprobe durch den Nutzer aufweist. Der zweite Ausgang kann aber auch entfallen. In Ausführungsformen mit beiden Ausgängen und automatischer Fokussiereinrichtung kann die automatische Fokussiereinrichtung eingerichtet sein, einen gemeinsamen Teil der Optik des Mikroskops einzustellen, wobei der gemeinsame Teil der Optik die Abbildung durch das Mikroskop an dem ersten Ausgang und dem zweiten Ausgang beeinflusst. Die automatische Fokussiereinrichtung kann also eingerichtet sein, sowohl ein über das Okular abgebildetes Bild der Gewebeprobe als auch das von der Mikroskopkamera aufgenommene Bild der Gewebeprobe zu fokussieren, insbesondere gleichzeitig. Es ist aber auch möglich, dass sich die automatische Fokussierung nur auf den ersten Ausgang erstreckt. Das Mikroskop kann also beispielsweise eine manuelle Fokussiereinrichtung zur manuellen Fokussierung eines über das Okular abgebildeten Bildes der Gewebeprobe aufweisen, und ferner eine automatische Fokussiereinrichtung, die eingerichtet ist, ein von der Mikroskopkamera aufgenommenes Bild der Gewebeprobe zu fokussieren. Letztgenannte automatische Fokussiereinrichtung kann insbesondere nicht eingerichtet sein, das über das Okular abgebildete Bild der Gewebeprobe zu fokussieren. Eine solche Fokussiereinrichtung kann beispielsweise als optischer Adapter zwischen dem ersten Ausgang des Mikroskops und der Kamera ausgebildet sein.

Typischerweise würde die Steuerung des Mikroskops durch einen Nutzer erfolgen, während er durch ein solches Okular schaut, d. h. nicht oder nicht allein auf Basis der von der Kamera aufgenommenen Bilder. Eine gute Orientierung und entsprechend präzise Steuerung setzt allerdings, insbesondere bei hohen Vergrößerungsgraden, erfahrungsgemäß voraus, dass die Gewebeprobe bereits tatsächlich gefärbt ist. Ungefärbtes Gewebe gibt dem durch das Okular blickenden Nutzer üblicherweise nicht genügend Anhaltspunkte zur Orientierung und damit Steuerung des Mikroskops. Die oben genannte Ausführungsform einer virtuellen Umfärbung, also einer Erzeugung von Bildern in einer zweiten Färbung aus Bildern mit einer davon verschiedenen ersten Färbung, ist also besonders praxisrelevant. So erhält der Nutzer über das Okular wie gewohnt die Information der ersten Färbung, über die Aufnahme mittels der Kamera aber zusätzlich Zugriff auf die Information der zweiten Färbung.

Es kann bevorzugt sein, dass das bereitgestellte Bild und das daraus erzeugte Bild einander zeitlich entsprechende Bewegtbilder sind, wobei eine in den Bildern erkennbare Bewegung eine Relativbewegung der Optik des Mikroskops und der Gewebeprobe zueinander oder eine Veränderung in einer Vergrößerungseinstellung der Optik des Mikroskops entspricht. Es ist also möglich, dass, während der Nutzer das Mikroskop steuert, d. h. unterschiedliche Bereiche der Gewebeprobe zur Abbildung durch die Optik bringt und/oder Vergrößerungseinstellungen an der Optik vornimmt, die dazu führen, dass etwa ein gerade unter der Optik befindlicher Bereich der Gewebeprobe in einem größeren Ausschnitt zur Abbildung kommt, währenddessen kontinuierlich oder quasi-kontinuierlich ein entsprechendes Bewegtbild von der Kamera aufgenommen wird. Das von der Kamera erzeugte Bewegtbild kann auch als Mitschnitt dessen aufgefasst werden, was über das Okular sichtbar ist.

Die Analysemöglichkeiten für den Nutzer können durch eine geeignete Art der Anzeige eines oder mehrerer durch die Bildverarbeitungseinheit erzeugter, virtuell gefärbter Bilder weiter verbessert werden.

Insbesondere kann die Anzeigeeinheit eingerichtet sein, die Anzeigevorrichtung zu veranlassen, das bereitgestellte Bild und das daraus erzeugtes Bild gleichzeitig in voneinander separaten Anzeigebereichen anzuzeigen. So hat der Nutzer die Möglichkeit, ein Bild der Gewebeprobe mit gewohntem Informationsgehalt gleichzeitig mit einem entsprechenden Bild anzusehen, das eine virtuelle Färbung aufweist und damit weitere Informationen bieten kann.

Auch kann die Anzeigeeinheit eingerichtet sein, die Anzeigevorrichtung zu veranlassen, das bereitgestellte Bild und das daraus erzeugte Bild abhängig von einer Nutzereingabe in einem selben Anzeigebereich anzuzeigen, wobei die Nutzereingabe bestimmt, welches der Bilder angezeigt wird. Eine solche Darstellungsform kann vorteilhaft sein, um dem Nutzer eine räumliche Korrelation des bereitgestellten Bilds und des daraus erzeugten Bilds zu erleichtern. Insbesondere kann der Nutzer durch Hin- und Herschalten zwischen dem bereitgestellten und dem daraus erzeugten Bild erkennen, wie sich ein und derselbe Gewebebereich, der vorzugsweise in beiden Bildern auf ein und demselben Teil des Anzeigebereichs zur Anzeige kommt, hinsichtlich seines Informationsgehalts durch die erzeugte virtuelle Färbung verändert.

In einer weiteren Ausführungsform ist die Anzeigeeinheit eingerichtet, die Anzeigevorrichtung zu veranlassen, das bereitgestellte Bild in einem gemeinsamen Anzeigebereich anzuzeigen, und einen Teil des daraus erzeugten Bildes abhängig von einer Nutzereingabe in einem Teilbereich des gemeinsamen Anzeigebereichs anzuzeigen, wobei der angezeigte Teil des erzeugten Bildes räumlich dem Teil des bereitgestellten Bildes entspricht, der in dem Teilbereich der gemeinsamen Anzeige angezeigt würde. Diese Darstellungsweise kann auch als Variante der vorgenannten Darstellungsweise verstanden werden mit dem Unterschied, dass die Nutzereingabe nun speziell einen Teilbereich bestimmt, in dem statt des bereitgestellten Bildes das erzeugte Bild angezeigt werden soll. Dadurch, dass in einem übrigen Teil des gemeinsamen Anzeigebereichs weiterhin das bereitgestellte Bild angezeigt wird, kann diese Ausführungsform zudem als Variante der erstgenannten Darstellungsweise, und daher als hybride Darstellung verstanden werden. Der Nutzer kann gemäß dieser Ausführungsform frei darüber bestimmen, welche Bereiche der Gewebeprobe er mit der jeweiligen virtuellen Färbung anzeigen lassen möchte, während weiterhin, d. h. gleichzeitig und in richtiger räumliche Beziehung zu dem virtuell gefärbten Bildbereich, übrige Bereiche mit einer ursprünglichen Färbung oder ohne Färbung angezeigt werden.

In einer Abwandlung der letztgenannten Ausführungsform ist die Anzeigeeinheit eingerichtet, die Anzeigevorrichtung zu veranlassen, das aus dem bereitgestellten Bild erzeugte Bild in dem gemeinsamen Anzeigebereich anzuzeigen, und einen Teil des bereitgestellten Bildes abhängig von einer dritten Nutzereingabe in dem Teilbereich des gemeinsamen Anzeigebereichs anzuzeigen, wobei der angezeigte Teil des bereitgestellten Bildes räumlich dem Teil des daraus erzeugten Bildes entspricht, der in dem Teilbereich der gemeinsamen Anzeige angezeigt würde. Diese Abwandlung ließe sich auch als gegenüber der oben genannten Darstellungsweise invertierte Darstellung bezeichnen. Die beiden Darstellungsweisen können für einen Nutzer auswählbaren Optionen entsprechen. Allgemeiner kann die Anzeigeeinheit also eingerichtet sein, die Anzeigevorrichtung zu veranlassen, ein erstes Bild der Gewebeprobe in einem gemeinsamen Anzeigebereich anzuzeigen, und einen Teil eines zweiten Bildes der Gewebeprobe abhängig von einer dritten Nutzereingabe in einem Teilbereich des gemeinsamen Anzeigebereichs anzuzeigen, wobei der angezeigte Teil des zweiten Bildes räumlich dem Teil des ersten Bildes entspricht, der in dem Teilbereich der gemeinsamen Anzeige angezeigt würde, wobei a) das erste Bild das bereitgestellte Bild und das zweite Bild das daraus erzeugte Bild ist und/oder b) das zweite Bild das bereitgestellte Bild und das erste Bild das daraus erzeugte Bild ist. In dem Teilbereich wird vorzugsweise das zweite Bild nicht, auch nicht nur bereichsweise, angezeigt. Andererseits wird in einem von dem Teilbereich verschiedenen restlichen Teil des gemeinsamen Anzeigebereichs das zweite Bild vorzugsweise nicht, auch nicht nur bereichsweise, angezeigt. Der Teilbereich und der restliche Bereich schließen sich also vorzugsweise aus.

Die Erfindung bezieht sich auch auf eine bestimmungsgemäße Verwendung des beschriebenen Systems, d. h. auf eine Verwendung des Systems zur Analyse eines Bildes einer Gewebeprobe, das über eine an ein Mikroskop angeschlossene Mikroskopkamera aufgenommen wurde.

Zudem bezieht sich die Erfindung auf eine Einrichtung zur bildbasierten Analyse einer Gewebeprobe, die neben dem System das Mikroskop mit der daran angeschlossenen Mikroskopkamera und die Anzeigevorrichtung aufweist. Die Einrichtung weist also ein Mikroskop mit einer daran angeschlossenen Mikroskopkamera zum Aufnehmen eines Bildes einer Gewebeprobe auf, ein System gemäß einer der oben beschriebenen Ausführungsformen zum Erzeugen eines virtuell gefärbten Bildes der Gewebeprobe aus dem aufgenommenen Bild, und eine Anzeigevorrichtung zum Anzeigen des erzeugten Bildes.

Weiterhin bezieht sich die Erfindung auf ein dem System entsprechendes Verfahren, d. h. auf ein Verfahren zur Unterstützung eines Nutzers bei der bildbasierten Analyse einer Gewebeprobe, das folgende Schritte umfasst: Bereitstellen eines über eine an ein Mikroskop angeschlossene Mikroskopkamera aufgenommenen Bildes der Gewebeprobe, Erzeugen eines virtuell gefärbten Bildes der Gewebeprobe aus dem bereitgestellten Bild und Ausgeben des erzeugten Bildes zur Analyse durch den Nutzer an eine Anzeigevorrichtung.

Die Erfindung bezieht sich auch auf ein dem System und dem Verfahren entsprechendes Computerprogramm, d. h. auf ein Computerprogramm zur Unterstützung eines Nutzers bei der bildbasierten Analyse einer Gewebeprobe, umfassend Anweisungen, deren Ausführung auf einem Computer den Computer dazu veranlassen, das oben genannte Verfahren auszuführen.

Es versteht sich, dass das System, seine Verwendung, die Einrichtung, das Verfahren und das Computerprogramm ähnliche oder identische Ausführungsformen haben. Es versteht sich also, dass sich auch die Verwendung gemäß Anspruch 13, die Einrichtung gemäß Anspruch 14, das Verfahren gemäß Anspruch 15 und das Computerprogramm gemäß Anspruch 16 die besonderen Vorteile des Systems gemäß Anspruch 1 zu Nutze machen, wie sie in den gemeinsamen Ausführungsformen gemäß den abhängigen Ansprüchen zum Tragen kommen.

Im Folgenden werden Ausführungsformen der Erfindung unter Bezugnahme auf nachstehend genannte Figuren beschrieben, um die oben genannten Aspekte sowie weitere Aspekte zu veranschaulichen.

### KURZE BESCHREIBUNG DER FIGUREN

- Figur 1: zeigt schematisch und exemplarisch eine Einrichtung zur bildbasierten Analyse einer Gewebeprobe,
- Figur 2: zeigt schematisch und exemplarisch einen Verfahrensablauf zur bildbasierten Analyse einer Gewebeprobe,
- Figur 3A: zeigt schematisch und exemplarisch eine erste Ausgestaltung einer grafischen Benutzeroberfläche zur Anzeige von Bildern einer Gewebeprobe,
- Figur 3B: zeigt schematisch und exemplarisch eine Abwandlung der ersten Ausgestaltung der grafischen Benutzeroberfläche,
- Figur 4: zeigt schematisch und exemplarisch eine zweite Ausgestaltung der grafischen Benutzeroberfläche, und
- Figur 5: zeigt schematisch und exemplarisch eine dritte Ausgestaltung der grafischen Benutzeroberfläche.

### AUSFÜHRLICHE BESCHREIBUNG VON AUSFÜRHUNGSFORMEN

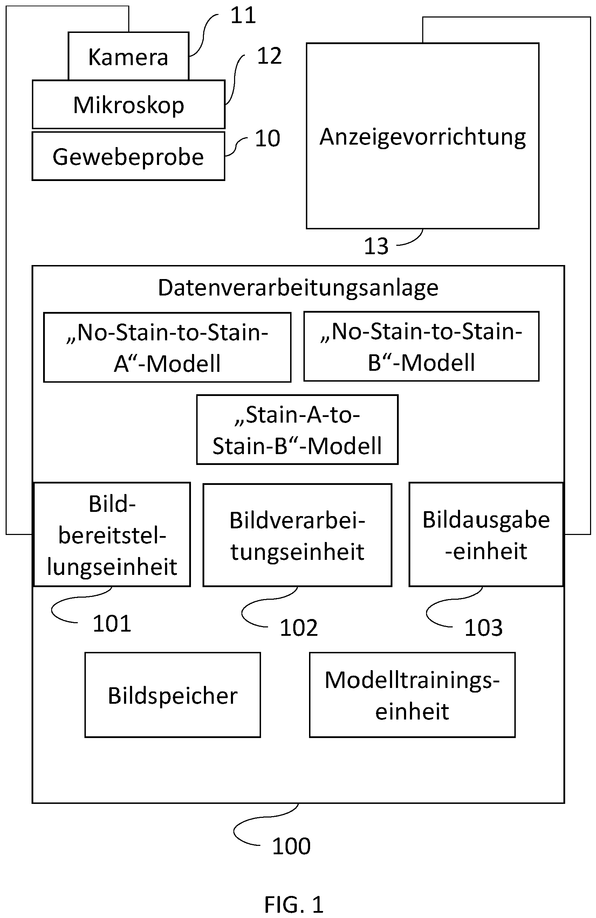

Figur 1 zeigt beispielhaft eine schematische Darstellung einer Einrichtung zur Unterstützung eines Nutzers bei der bildbasierten Analyse einer Gewebeprobe 10. Die Einrichtung umfasst ein Mikroskop 12 mit einer daran angeschlossenen Kamera 11 zur Abbildung einer entsprechend präparierten Gewebeprobe 10 mittels einer Optik des Mikroskops 12, wobei das von der Optik des Mikroskops 12 erzeugte Bild über die Kamera 11 digitalisiert wird. Das Mikroskop 12 kann insbesondere ein Durchlichtmikroskop oder ein Fluoreszenzmikroskop sein, insbesondere auch ein Autofluoreszenzmikroskop. Wie für Mikroskopkameras üblich, verfügt die Kamera 11 über keine verstellbare Optik.

Die Kamera 11 hat keinen Einfluss auf die Bedienung des Mikroskops 12, sondern erlaubt es lediglich, jeweils über die Optik des Mikroskops 12 abgebildete Bereiche der Gewebeprobe 10 in Form von digitalen Bildern anzuzeigen und/oder abzuspeichern. Insbesondere kann der Nutzer die Gewebeprobe 10 weiterhin direkt durch die Optik betrachten, d. h. über ein entsprechendes Okular. Die Optik weist also einen ersten Ausgang in Form eines Okulars und einen zweiten Ausgang zum Anschluss der Kamera 11 auf.

Die Optik des Mikroskops 12 kann manuell, halbautomatisch oder vollautomatisch verstellbar sein. Weist das Mikroskop 12 eine zumindest teilweise manuelle Fokussiereinrichtung zur Fokussierung der Gewebeprobe 10 auf, hängt die Schärfe, mit der die Gewebeprobe 10 abgebildet wird, von der Bedienung der Fokussiereinrichtung durch den Nutzer ab. Dies kann dazu führen, dass die Qualität der mittels der Kamera 11 aufgenommenen Bilder über verschiedene Bereiche der Gewebeprobe 10 und insbesondere über verschiedene, nacheinander mikroskopierte Gewebeproben hinweg signifikant variiert. Hierbei ist zu beachten, dass ein gewisses Maß an Variation auch bei gut geschulten Nutzern nicht zu vermeiden ist, da das menschliche Auge das von der Optik erzeugte Bild unwillkürlich korrigiert. Andererseits erweist sich eine Steuerung des Mikroskops 12 allein über die von der Kamera 11 aufgenommenen Bilder in der Praxis als schwierig. Es ist daher gängige Praxis, eine manuelle Steuerung des Mikroskops 12, insbesondere eine manuelle Fokussierung der Gewebeprobe 10, anhand von - unwillkürlich durch das menschliche Sehsystem korrigierten - Bildern vorzunehmen, die nicht jenen entsprechen, die von der Kamera 11 aufgenommen werden.

Zur Anbringung der Kamera 11 an das Mikroskop 12 kann ein Adapter vorgesehen sein, beispielsweise ein C-Mount oder ein TV-Adapter, der auch eine eigene, d. h. eine von der Optik des Mikroskops 12 verschiedene Optik, aufweisen kann. Auch eine solche Optik eines Adapters zwischen der Kamera 11 und dem Mikroskop 12 kann verstellbar sein, beispielsweise manuell. Typischerweise wird diese Möglichkeit aber nur bei einer anfänglichen Justierung des Mikroskops genutzt. Im regulären Betrieb, d. h. insbesondere während der Analyse eines jeweiligen Gewebeschnitts, bliebe die Optik des Adapters hingegen unverstellt. Dadurch fallen das von einem Nutzer über das Okular wahrgenommene Bild und das von der Kamera 11 aufgenommene Bild in der Regel weiterhin auseinander. Dieser Umstand, der bisher nicht als Problem angesehen wurde, kann dadurch abgemildert werden, dass eine rein automatische Fokussiereinrichtung des Mikroskops vorgesehen ist, oder eine automatische Fokussiereinrichtung, die das Kamerabild, nicht aber das Bild am Okular fokussiert. Letztere könnte beispielsweise ein Autofokus-Adapter zum Anschluss der Kamera 11 an das Mikroskop sein.

Die in Figur 1 gezeigte Einrichtung weist ferner eine Datenverarbeitungsanlage 100 zur Verarbeitung und/oder zum Speichern der von der Kamera 11 aufgenommenen Bilder auf. Die aufgenommenen Bilder können also beispielsweise auf einem Bildspeicher der Datenverarbeitungseinheit 100 zur späteren Analyse abgelegt werden. Eine Bildbereitstellungseinheit 101 der Datenverarbeitungsanlage 100 dient dabei als Schnittstelle zur Kamera 11. Die Bildbereitstellungseinheit 101 ist also dazu eingerichtet, ein von der Kamera 11 aufgenommenes Bild der Gewebeprobe 10 zu empfangen und dieses abzuspeichern und/oder zur Verarbeitung an eine Bildverarbeitungseinheit 102 der Datenverarbeitungsanlage 100 bereitzustellen. Die Verarbeitung durch die Bildverarbeitungseinheit 102 umfasst ein Erzeugen eines virtuell gefärbten Bildes aus dem bereitgestellten Bild, das nachfolgend auch als Kamerabild bezeichnet wird. Das erzeugte, virtuell gefärbte Bild zeigt dabei den gleichen Ausschnitt der Gewebeprobe 10, den auch das Kamerabild zeigt, allerdings mit einer virtuellen Färbung. Sofern das Kamerabild keine Färbung aufweist, weil die Gewebeprobe 10 nicht gefärbt worden ist, kann dies bedeuten, dass erst in dem virtuell gefärbten Bild Gewebestrukturen sichtbar werden. Wenn das Kamerabild bereits eine Färbung aufweist, weil die Gewebeprobe 10 gefärbt worden ist, können, bei abweichender virtueller Färbung, andere Gewebestrukturen sichtbar werden als in dem Kamerabild.

Zur Erzeugung des virtuell gefärbten Bildes aus dem Kamerabild ist die Bildverarbeitungseinheit 102 eingerichtet, auf eines einer Mehrzahl von Modellen zurückzugreifen, die mittels maschinellem Lernen trainiert oder auf andere Weise angepasst, parametrisiert oder konfiguriert worden sind, Bilder von Gewebeproben ohne Färbung oder in einer Eingangsfärbung auf entsprechende Bilder der Gewebeproben in einer Ausgangsfärbung abzubilden. Beispielsweise können, wie in Figur 1 gezeigt, in der Datenverarbeitungsanlage 100 zum Zugriff durch die Bildverarbeitungseinheit 102 gespeichert sein: ein erstes Modell, das trainiert worden ist, Bilder von farblosen Gewebeproben auf entsprechende Bilder der Gewebeproben mit einer virtuellen Färbung A abzubilden, ein zweites Modell, das trainiert worden ist, Bilder von farblosen Gewebeproben auf entsprechende Bilder der Gewebeproben mit einer virtuellen Färbung B abzubilden, und ein drittes Modell, das trainiert worden ist, Bilder von Gewebeproben mit der Färbung A auf entsprechende Bilder der Gewebeproben mit der Färbung B abzubilden. Das Training der Modelle kann mittels einer eigens dafür vorgesehenen Modelltrainingseinheit der Datenverarbeitungsanlage 100 und in der Bildspeichereinheit zuvor abgespeicherter und als Trainingsbilder deklarierter Kamerabilder vorgenommen worden sein. Genauso kann das Training aber auch separat vollzogen worden sein, insbesondere auch basierend auf nicht von der Kamera 11 aufgenommenen Bildern, d. h. anhand von Daten anderen Ursprungs. Es ist insbesondere auch möglich, dass das Training nicht speziell mit dem vorliegend intendierten Einsatzweck ausgeführt worden ist, sich das trainierte Modell aber dennoch dazu eignet. Dementsprechend ist auch die Architektur der Modelle, d. h. die Struktur der Modelle in ihrer untrainierten Form, prinzipiell beliebig. Insbesondere ist die Architektur der Modelle nicht auf tiefe neuronale Netze beschränkt.

Vorteilhafterweise haben die trainierten Modelle eine Architektur, die eine Bildverarbeitung in Echtzeit erlaubt, d. h. ohne signifikante Verzögerung zwischen Aufnahme bzw. Bereitstellung eines Kamerabildes und Erzeugung eines entsprechenden Bildes mit virtueller Färbung. Beispielsweise kann eine Zahl von Parametern der Modelle entsprechend niedrig gewählt sein. Eine Bildverarbeitung in Echtzeit kann insbesondere dann von Vorteil sein, wenn das Kamerabild ein Bewegtbild ist, wie es beispielsweise durch eine Videoaufnahmefunktion der Kamera 11 aufgenommen worden sein kann, während der Nutzer das Mikroskop 12 so steuert, dass dessen Optik und die Gewebeprobe 10 eine Relativbewegung zueinander ausführen und/oder dass sich eine Vergrößerungseinstellung der Optik verändert. Die dann in dem Bewegtbild der Kamera 11 im zeitlichen Verlauf erscheinenden unterschiedlichen und/oder unterschiedlich großen Bereiche der Gewebeprobe 10 können dann auch in dem von der Bildbereitstellungseinheit 102 erzeugten, virtuell gefärbten Bild zu sehen sein, welches in diesem Fall ein dem Kamerabild zeitlich entsprechendes Bewegtbild wäre.

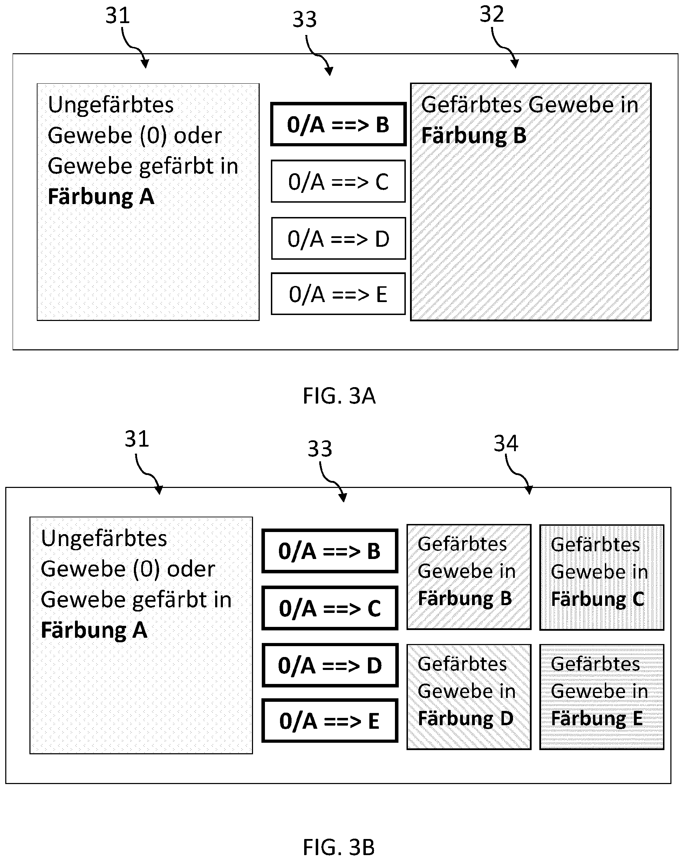

Die Datenverarbeitungsanlage 100 weist ferner eine Bildausgabeeinheit 103 auf, die eingerichtet ist, von der Bildverarbeitungseinheit 102 erzeugte Bilder zur Analyse durch den Nutzer an eine Anzeigevorrichtung 13 der in Figur 1 gezeigten Einrichtung auszugeben. Die Bildausgabeeinheit 103 kann also eine weitere Schnittstelle der Datenverarbeitungsanlage 100 aufweisen, darüber hinaus aber insbesondere eingerichtet sein, eine auf der Anzeigevorrichtung 13 anzuzeigende grafische Benutzeroberfläche zu erzeugen und/oder zu steuern. Die Figuren 3A bis 5 zeigen vorteilhafte Ausgestaltungen der Benutzeroberfläche.

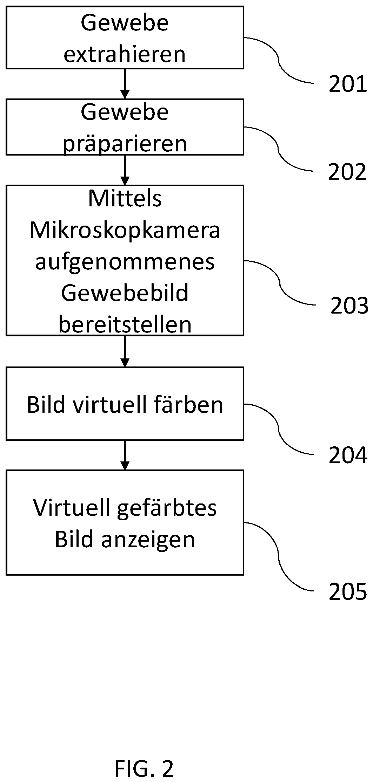

Figur 2 zeigt beispielhaft ein Ablaufdiagramm mit Schritten eines Verfahrens zur Analyse der Gewebeprobe 10, in dem die in Figur 1 gezeigte Einrichtung Verwendung findet. In einem ersten Schritt 201 des Verfahrens wird die Gewebeprobe 10 entnommen. Dies kann während eines chirurgischen Eingriffs erfolgen und könnte auch als Biopsie bezeichnet werden. In einem zweiten Schritt 202 des Verfahrens wird die entnommenen Gewebeprobe 10 zur weiteren Analyse präpariert. Dies beinhaltet in der Histologie typischerweise ein Fixieren der Gewebeprobe 10, ein anschließendes Einbetten der Gewebeprobe 10 in einem Stützmaterial, ein Schneiden der eingebetteten Gewebeprobe in Schnitte und ein Anordnen der Schnitte auf Objektträgern zur Abbildung unter einem Mikroskop wie dem Mikroskop 12. In einem Schritt 203 wird also ein Kamerabild eines auf einem Objektträger präparierten Gewebeschnitts bereitgestellt. Dieses Bild wird dann in einem folgenden Schritt 204 wie oben mit Bezug auf Figur 1 beschrieben virtuell gefärbt und anschließend, in einem weiteren Schritt 205, auf der Anzeigevorrichtung 13 angezeigt.

Figur 3A zeigt beispielhaft und schematisch eine Ausgestaltung der grafischen Benutzeroberfläche, gemäß der das Kamerabild und das daraus erzeugte, virtuell gefärbte Bild gleichzeitig in voneinander separaten Anzeigebereichen angezeigt werden. In Figur 3A wird das Kamerabild in einem linken Anzeigebereich 31 und das virtuell gefärbte Bild in einem rechten Anzeigebereich 32 angezeigt. Zwischen den beiden Anzeigebereichen 31, 32 ist ein Auswahlbereich 33 vorgesehen, der durch den Nutzer auswählbare Schaltflächen aufweist, von denen jede je einer möglichen virtuellen Färbung des Kamerabilds entspricht. Das in dem Anzeigebereich 32 angezeigte virtuell gefärbte Bild weist diejenige virtuelle Färbung auf, die der durch den Nutzer ausgewählten Schaltfläche entspricht.

Figur 3B zeigt beispielhaft und schematisch eine abgewandelte Form der grafischen Benutzeroberfläche gemäß Figur 3A. Die Abwandlung besteht darin, dass statt des Anzeigebereichs 32 ein geteilter Anzeigebereich 34 mit voneinander separaten Anzeigeteilbereichen vorgesehen ist. In den Anzeigeteilbereichen des Anzeigebereich 34 wird das Kamerabild in verschiedenen virtuellen Färbungen gleichzeitig angezeigt. Welche virtuellen Färbungen angewandt bzw. angezeigt werden, bestimmt sich wiederum über eine durch den Nutzer getroffene Auswahl entsprechender Schaltflächen in dem Auswahlbereich 33, wobei nun im Unterschied zu Figur 3A die Besonderheit besteht, dass mehrere Schaltflächen gleichzeitig ausgewählt werden können.

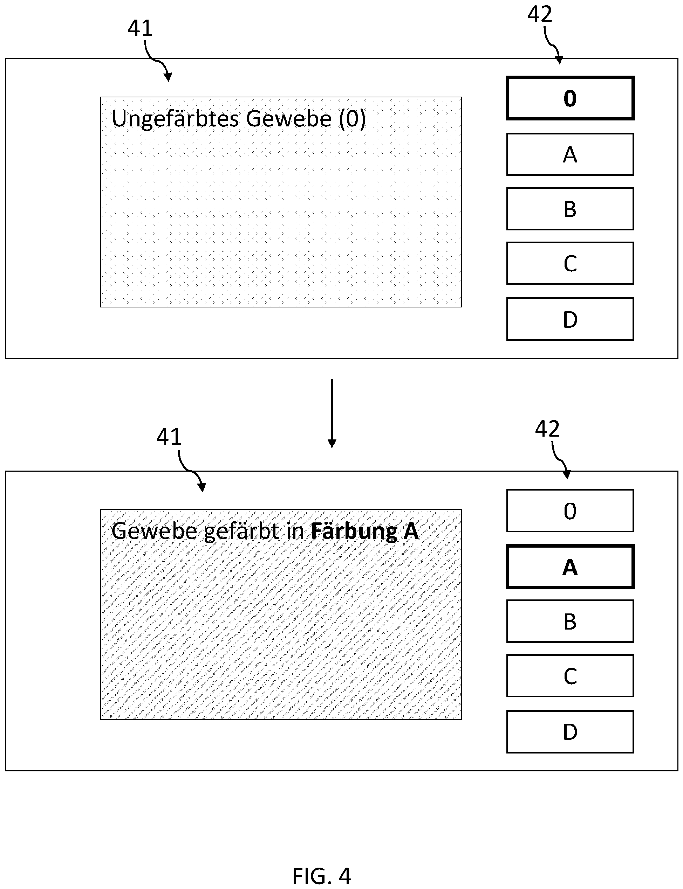

Figur 4 zeigt beispielhaft und schematisch eine Ausgestaltung der von der Anzeigevorrichtung 13 angezeigten grafischen Benutzeroberfläche, gemäß der lediglich ein Anzeigebereich 41 vorgesehen ist, in dem zu jeder gegebenen Zeit lediglich entweder das Kamerabild oder ein virtuell gefärbtes Bild angezeigt wird. Welches der Bilder angezeigt wird, kann der Nutzer wiederum über eine Auswahl einer entsprechenden Schaltfläche eines Auswahlbereichs 42 bestimmen.

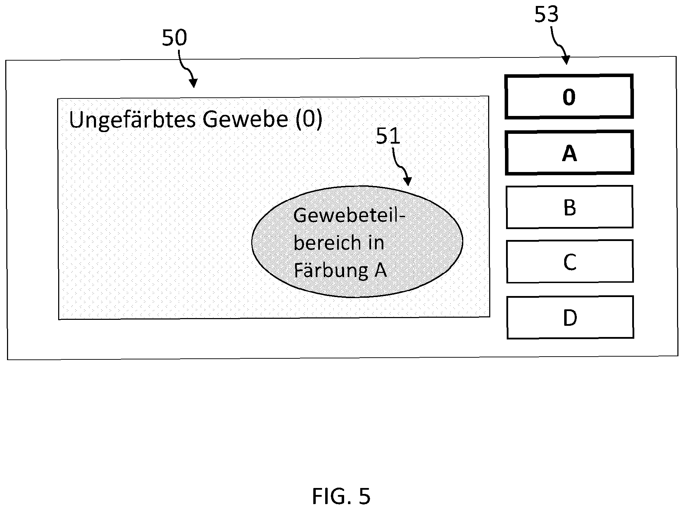

Figur 5 zeigt beispielhaft und schematisch eine weitere Ausgestaltung der grafischen Benutzeroberfläche. Gemäß dieser Ausgestaltung ist ein gemeinsamer Anzeigebereich 50 vorgesehen, in dem grundsätzlich das Kamerabild angezeigt wird, in dem der Nutzer aber durch eine entsprechende Nutzereingabe einen Teilbereich 51 definieren kann, in dem ein entsprechender Bildbereich mit virtueller Färbung angezeigt wird. Welche virtuelle Färbung in dem Teilbereich 51 angewandt wird, kann wiederum über eine entsprechende Nutzerauswahl einer Schaltfläche in einem Auswahlbereich 53 bestimmt werden. Wahlweise kann statt des Kamerabildes auch ein virtuell gefärbtes Bild als grundsätzlich in dem Anzeigebereich 50 anzuzeigendes Bild vorgesehen sein, wobei dann in dem Teilbereich 51 ein Bildbereich mit einer anderen virtuellen Färbung angezeigt würde. Es kann aber auch nützlich sein, dass ein virtuell gefärbtes Bild als grundsätzlich in dem Anzeigebereich 50 anzuzeigendes Bild vorgesehen ist, während der in dem Teilbereich 51 angezeigte Bildbereich ein entsprechender Bildbereich des Kamerabildes ist. Welche dieser drei Varianten angewandt wird, kann wiederum durch den Nutzer durch eine entsprechende Nutzereingabe bestimmbar sein.

Der Anzeigebereich 50 könnte auch als eine Überlagerung des Kamerabildes mit den daraus erzeugten virtuell gefärbten Bildern verstanden werden, wobei jede Ebene der Überlagerung einer anderen virtuellen Färbung der Gewebeprobe 10 entspricht und in dem Teilbereich 51 ein entsprechender Ausschnitt der der durch den Nutzer ausgewählten virtuellen Färbung entsprechenden Ebene gezeigt wird.

Obwohl die Vorteile der vorliegend beschriebenen Ausführungsformen besonders in der Histopathologie zum Tragen kommen, sind andere Anwendungsfelder denkbar. Jedenfalls ist eine Gewebeprobe im vorliegenden Sinne eine beliebige Probe von Gewebe, wobei das Gewebe pflanzlichen, tierischen oder menschlichen Ursprungs sein kann. Eine tatsächliche Färbung einer Gewebeprobe, die auch als histologische Färbung bezeichnet werden könnte, wird vorliegend verstanden als eine Markierung von biologischen Elementen der Gewebeprobe basierend auf biochemischen Eigenschaften, wobei eine Wahl des Färbemittels einer Wahl der zu markierenden Elemente entsprechen kann. Eine virtuelle Färbung kann als eine digitale Nachbildung der tatsächlichen Färbung verstanden werden. Die digitale Nachbildung vollzieht sich, statt an einer Gewebeprobe selbst, an einem Bild der Gewebeprobe. Dabei soll der Begriff "Bild" auch einem Bild entsprechende Bilddaten befassen.

Abwandlungen der vorliegend beschriebenen Ausführungsformen werden vom Fachmann, nach einem Studium der Offenbarung einschließlich der Figuren und Ansprüche, bei der Ausführung der beanspruchten Erfindung erkannt und realisiert werden.

In den Ansprüchen schließen die Wörter "aufweisen" und "umfassen" nicht andere Elemente oder Schritte aus und der bestimmte Artikel "ein" bzw. "eine" schließt eine Mehrzahl nicht aus.

Eine einzelne Einheit oder Vorrichtung kann die Funktionen mehrerer Elemente durchführen, die in den Ansprüchen aufgeführt sind. Die Tatsache, dass einzelne Funktionen und Elemente in unterschiedlichen abhängigen Ansprüchen aufgeführt sind, bedeutet nicht, dass nicht auch eine Kombination dieser Funktionen oder Elemente vorteilhaft verwendet werden könnte.

Ein Computerprogramm kann auf einem geeigneten Medium, wie beispielsweise einem optischen Speichermedium oder Festkörpermedium (SSD), gespeichert oder verteilt werden, das zusammen oder als Teil von anderer Hardware bereitgestellt werden kann, oder aber auf andere Weise, wie beispielsweise über das Internet oder andere kabelgebundene oder kabellose Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt ist.

Die Erfindung bezieht sich auf ein System zur Unterstützung eines Nutzers bei der bildbasierten Analyse einer Gewebeprobe. Das System weist eine Bildbereitstellungseinheit auf, die eingerichtet ist, ein über eine an ein Mikroskop angeschlossene Mikroskopkamera aufgenommenes Bild der Gewebeprobe bereitzustellen, und zudem eine Bildverarbeitungseinheit, die eingerichtet ist, aus dem bereitgestellten Bild ein Bild der Gewebeprobe mit einer virtuellen Färbung zu erzeugen. Darüber hinaus weist das System eine Bildausgabeeinheit auf, die eingerichtet ist, das erzeugte Bild zur Analyse durch den Nutzer an eine Anzeigevorrichtung auszugeben. Das System erlaubt ressourcenschonende und gleichzeitig besonders sorgfältige histologische Analysen.

## Patentansprüche

1. System zur Unterstützung eines Nutzers bei der bildbasierten Analyse einer Gewebeprobe (10), aufweisend:
- eine Bildbereitstellungseinheit (101), die eingerichtet ist, ein über eine an ein Mikroskop (12) angeschlossene Mikroskopkamera (11) aufgenommenes Bild der Gewebeprobe (10) bereitzustellen,
- eine Bildverarbeitungseinheit (102), die eingerichtet ist, aus dem bereitgestellten Bild ein Bild der Gewebeprobe (10) mit einer virtuellen Färbung zu erzeugen, und
- eine Bildausgabeeinheit (103), die eingerichtet ist, das erzeugte Bild zur Analyse durch den Nutzer an eine Anzeigevorrichtung (13) auszugeben.

2. System nach Anspruch 1, wobei das Mikroskop eine manuelle Fokussiereinrichtung zur manuellen Fokussierung der Gewebeprobe (10) aufweist und das bereitgestellte Bild mittels der manuellen Fokussiereinrichtung aufgenommen wurde.

3. System nach einem der Ansprüche 1 oder 2, wobei das Mikroskop (12) eine automatische Fokussiereinrichtung zur automatischen Fokussierung der Gewebeprobe (10) aufweist und das bereitgestellte Bild mittels der automatischen Fokussiereinrichtung aufgenommen wurde.

4. System nach einem der vorhergehenden Ansprüche, wobei das bereitgestellte Bild ein Bild einer ungefärbten Gewebeprobe (10) ist.

5. System nach einem der Ansprüche 1 bis 3, wobei das bereitgestellte Bild ein Bild einer mit einer ersten Färbung gefärbten Gewebeprobe (10) ist und die virtuelle Färbung eine virtuelle Färbung mit einer zweiten Färbung ist, die von der ersten Färbung verschieden ist.

6. System nach einem der vorhergehenden Ansprüche, wobei das Mikroskop (12) ein Durchlichtmikroskop ist.

7. System nach einem der Ansprüche 1 bis 5, wobei das Mikroskop (12) ein Fluoreszenzmikroskop ist.

8. System nach einem der vorhergehenden Ansprüche, wobei das bereitgestellte Bild und das daraus erzeugte Bild einander zeitlich entsprechende Bewegtbilder sind, wobei eine in den Bildern erkennbare Bewegung einer Relativbewegung der Optik des Mikroskops (12) und der Gewebeprobe (10) zueinander und/oder einer Veränderung in einer Vergrößerungseinstellung der Optik des Mikroskops (12) entspricht.

9. System nach einem der vorhergehenden Ansprüche, wobei die Bildverarbeitungseinheit (102) eingerichtet ist, die virtuelle Färbung abhängig von einer ersten Nutzereingabe aus einer vorbestimmten Mehrzahl von möglichen virtuellen Färbungen auszuwählen.

10. System nach einem der vorhergehenden Ansprüche, wobei die Anzeigeeinheit (103) eingerichtet ist, die Anzeigevorrichtung (13) zu veranlassen, das bereitgestellte Bild und das daraus erzeugte Bild gleichzeitig in voneinander separaten Anzeigebereichen (31, 32; 31, 34) anzuzeigen.

11. System nach einem der vorhergehenden Ansprüche, wobei die Anzeigeeinheit (103) eingerichtet ist, die Anzeigevorrichtung (13) zu veranlassen, das bereitgestellte Bild und das daraus erzeugte Bild abhängig von einer zweiten Nutzereingabe in einem selben Anzeigebereich (41) anzuzeigen, wobei die zweite Nutzereingabe bestimmt, welches der Bilder angezeigt wird.

12. System nach einem der vorhergehenden Ansprüche, wobei die Anzeigeeinheit (103) eingerichtet ist, die Anzeigevorrichtung (13) zu veranlassen, ein erstes Bild der Gewebeprobe in einem gemeinsamen Anzeigebereich (50) anzuzeigen, und einen Teil eines zweiten Bildes der Gewebeprobe abhängig von einer dritten Nutzereingabe in einem Teilbereich (51) des gemeinsamen Anzeigebereichs (50) anzuzeigen, wobei der angezeigte Teil des zweiten Bildes räumlich dem Teil des ersten Bildes entspricht, der in dem Teilbereich (51) der gemeinsamen Anzeige (50) angezeigt würde, wobei a) das erste Bild das bereitgestellte Bild und das zweite Bild das daraus erzeugte Bild ist und/oder b) das zweite Bild das bereitgestellte Bild und das erste Bild das daraus erzeugte Bild ist.

13. Verwendung eines Systems nach einem der vorhergehenden Ansprüche zur Analyse eines Bildes einer Gewebeprobe (10), das über eine an ein Mikroskop (12) angeschlossene Mikroskopkamera (11) aufgenommenen wurde.

14. Einrichtung zur bildbasierten Analyse einer Gewebeprobe (10), aufweisend:
- ein Mikroskop (12) mit einer daran angeschlossenen Mikroskopkamera (11) zur Aufnahme eines Bildes der Gewebeprobe (10),
- ein System nach einem der Ansprüche 1-12 zur Erzeugung eines virtuell gefärbten Bildes der Gewebeprobe (10) aus dem aufgenommenen Bild, und
- eine Anzeigevorrichtung (13) zum Anzeigen des erzeugten Bildes.

15. Verfahren zur Unterstützung eines Nutzers bei der bildbasierten Analyse einer Gewebeprobe (10), umfassend:
- Bereitstellen (203) eines über eine an ein Mikroskop angeschlossene Mikroskopkamera aufgenommenes Bildes der Gewebeprobe (10),
- Erzeugen (204) eines virtuell gefärbten Bildes der Gewebeprobe (10) aus dem bereitgestellten Bild, und
- Ausgeben (205) des erzeugten Bildes zur Analyse durch den Nutzer an eine Anzeigevorrichtung (13).

16. Computerprogramm zur Unterstützung eines Nutzers bei der bildbasierten Analyse einer Gewebeprobe (10), umfassend Anweisungen, deren Ausführung auf einem Computer den Computer dazu veranlassen, ein Verfahren nach Anspruch 15 ausführen.
